Europäisches Patentamt

European Patent Office

Office européen des brevets

(11) Veröffentlichungsnummer: **0 481 270 A1**

## EUROPÄISCHE PATENTANMELDUNG

(21) Anmeldenummer: **91116511.6**

(51) Int. Cl.⁵: **B23K  26/06**

(22) Anmeldetag: **27.09.91**

(30) Priorität: **19.10.90 DE 4033166**

(43) Veröffentlichungstag der Anmeldung:
**22.04.92 Patentblatt  92/17**

(84) Benannte Vertragsstaaten:
**DE ES FR GB IT**

(71) Anmelder: **Bergmann, Hans Wilhelm, Prof. Dr.**
**Irisstrasse 9**
**W-8501 Eckental Brand(DE)**

(72) Erfinder: **Bergmann, Hans Wilhelm, Prof. Dr.**
**Irisstrasse 9**
**W-8501 Eckental Brand(DE)**
Erfinder: **Lademann, Jürgen, Dr.**
**Hauffstrasse 36**
**O-1240 Fürstenwalde(DE)**
Erfinder: **Seliger, Klaus, Dr.**
**Otto-Winzer-Strasse 48**
**O-1142 Berlin(DE)**
Erfinder: **Thieme, Wolfgang, Dr.**
**Ho-Chi-Minh-Strasse 8**
**O-1156 Berlin(DE)**

(74) Vertreter: **Berdux, Klaus, Dipl.-Ing.**
**Höhenstrasse 17**
**W-8752 Krombach(DE)**

(54) **Verfahren zur Einkopplung von cw-CO2-Laserstrahlen.**

(57) Die Erfindung betrifft eine Anordnung und ein Verfahren zur impulslaserunterstützten cw-CO₂-Lasermaterialbearbeitung, wobei der Impulslaser zur Verbesserung der Materialbearbeitung ein CO₂-Impulslaser, vorzugsweise ein Mini-TEA-CO₂-Impulslaser ist und dessen Strahlung entweder in den Strahlengang vor der Bearbeitungsoptik des cw-Lasers eingekoppelt und mit dieser gemeinsam fokussiert wird oder mit einem separaten Strahl und einer zweiten Fokussierungsoptik auf den gemeinsamen Brennpunkt gerichtet wird sowie die Impulsleistung des Mini-TEA-Lasers zur Erzeugung einer Plasmafackel ausreicht und seine Folgefrequenz genügend hoch ist.

Fig.1

Die Erfindung betrifft ein Verfahren zur Einkopplung von cw-$CO_2$-Laserstrahlen in einen Werkstoffbereich bzw. eine Werkstoffstelle oder Abschnitten von diesen.

Von den Verfahren der Werkstoffbearbeitung mit dem Laserstrahl sind das Schweißen und Schneiden schon für viele Anwendungsfälle in die industrielle Fertigung eingeführt. Beide sind thermische Verfahren, bei denen das Werkstück durch die Energie des Laserstrahles erwärmt wird. Im Unterschied zu den meisten anderen Schweiß- und Schneidmethoden erfolgt die Energiezufuhr im Brennfleck des gebündelten Laserstrahles äußerst rasch und intensiv. Die Folge sind eine zeitlich und örtlich eng begrenzte Erwärmung sowie eine hohe Schweiß- bzw. Schneidgeschwindigkeit. Es fließt nur wenig Wärme in den Werkstoff ab. Die Wärmebelastung und der Verzug sind gering. Für die Werkstoffbearbeitung werden verhältnismäßig hohe Strahlleistungen benötigt, wie sie Kohlendioxid ($CO_2$-Laser) bringen. Möglich ist ein kontinuierlicher (cw) oder gepulster Betrieb.

Wenn ein Laserstrahl auf Werkstoffe auftrifft, dann wird ein Teil der Strahlungsenergie reflektiert und ein Teil absorbiert, wobei die Absorption von der Wellenlänge der Strahlung und vom Werkstoff abhängt. Ein cw-$CO_2$-Laser wird bei einer Wellenlänge von 10,6 $\mu$m betrieben, bei der beispielsweise Eisen nur etwa 10 % der eingestrahlten Energie zu absorbieren vermag. Diese geringe Absorption bei Metallen kommt dadurch zustande, daß die Reflektivität in diesem Wellenlängenbereich mit steigender elektrischer Leitfähigkeit ansteigt. Die Absorption bei Eisen wird mit zunehmender Einwirkungsdauer der Strahlung besser, weil dann die geringe absorbierte Strahlungsenergie den Werkstoff aufheizt, womit dann die elektrische Leitfähigkeit (Erzeugung einer Plasmawolke) und damit auch die Reflektivität sinken. Im Endeffekt erzielt man bei Eisen mit dem cw-$CO_2$-Laser eine Absorption von etwa 20 %.

Ähnlich wie Eisen verhalten sich auch Molybdän, Wolfram und Tantal. Hochreflektierende Metalle wie Gold, Silber, Kupfer und Aluminium absorbieren nur wenig und lassen sich daher mit dem cw-$CO_2$-Laser nicht sehr gut betreiben.

Bei Erhöhung der Intensität der Laserstrahlung wird das Werkstück dort, wo der Laser einwirkt, nicht nur aufgeschmolzen, sonderen durch und durch geschmolzen. Damit verschweißt man zwei Werkstücke, die stumpf aneinander liegen. Durch weitere Erhöhung der Intensität der Laserstrahlung, wird das Material mittels Laserstrahlung so stark erhitzt, daß es verdampft und in den Plasmazustand übergeht. Dabei findet eine wesentlich bessere Einkopplung der Laserstrahlung in das Werkstück statt. Dabei sind außerordentlich hohe Leistungsdichten erforderlich.

Es ist bekannt, zur Verbesserung der Absorption auf reflektierende Oberflächen von Werkstoffen Beschichtungen mit Graphitpulver aufzutragen.

Der Erfindung liegt die Aufgabe zugrunde, die Absorption bei einem cw-$CO_2$-Laser mit vergleichsweise kostengünstigen Maßnahmen zu erhöhen.

Diese Aufgabe wird erfindungsgemäß durch die kennzeichnenden Merkmale des Anspruches 1 gelöst.

Durch die Erfindung wird mit einem vergleichsweise billigen $CO_2$-Mini-Impulslaser, vorzugsweise einem TEA-$CO_2$-Impulslaser, der Wirkungsgrad des cw-$CO_2$-Lasers wesentlich erhöht, weil mit dem $CO_2$-Impulslaser bei genügend kurzer Impulsdauer im Bereich zwischen 10 ns (ns = nannosekunden) und 100 $\mu$s ($\mu$s = microsekunden) vornehmlich selbst bei kleiner Impulsenergie von etwa 100 mJ Spitzenleistungen im Megawatt-Bereich erreicht werden, mittels denen immer eine Plasmawolke erzeugt werden kann. Wird die Strahlung des $CO_2$-Impulslasers gleichzeitig oder im "Vorlauf" auf Abschnitte der zu bearbeitenden Werkstoffstelle gerichtet, kann die Verfahrgeschwindigkeit des cw-$CO_2$-Lasers während des Bearbeitungsvorganges erhöht werden. Hinzu kommt, daß die Sicherheit des Bedienungspersonales erhöht wird, da weniger Strahlung von der Oberfläche des Werkstoffes reflektiert wird.

Das Verfahren kann vorteilhaft, insbesondere bei komplizierten Werkstückkonturen, z. B. in Spalten oder Nuten, eingesetzt werden.

Ein Ausführungsbeispiel der Erfindung ist in der Zeichnung dargestellt und wird im folgenden näher beschrieben.

Die Infrarotstrahlung z. B. eines cw-$CO_2$-Lasers bei 10,6 $\mu$m wird besonders von Metallen stark reflektiert, so daß die Absorptionseigenschaften bei der Bestrahlung durch Erwärmung des absorbierten Abschnittes der Laserstrahlung erst verändert werden müssen. Bei bestimmten Materialien und sehr glatten Oberflächen ist deshalb eine Einkopplung der cw-Strahlung selbst bei Primär-Dauerleistung im Kilowattbereich nur in geringem Maße, d. h. in einem Bereich von 0 - 20 % möglich, auf jeden Fall wird aber immer ein beträchtlicher Teil der IR-Primärstrahlung reflektiert.

Um die Absorptionseigenschaften bedeutend zu verbessern, wird deshalb erfindungsgemäß vorgeschlagen, die Strahlung eines vergleichsweise kleinen $CO_2$-Impulsgaslasers geminsam mit der cw-Laserstrahlung auf dasselbe Bearbeitungsgebiet zu fokussieren. Da ein kleiner $CO_2$-Impulslaser bei genügend kurzer Impulsdauer im 10 ns-bis 100 $\mu$s-Bereich selbst bei kleiner Impulsenergie von etwa 100 mJ Spitzenleistungen im Megawatt-Bereich aussendet, kann nach Fokussierung dieser Strahlung auf beliebige Oberflächen wegen der hohen Leistungsdichten, die kurzzeitig über $10^8$ Watt/$cm^2$

liegen, immer eine Plasmawolke erzeugt sowie die Absorptionseigenschaften der zu bearbeitenden Oberfläche außerordentlich schnell so verändert werden, daß die Einkopplung der cw-Strahlung überhaupt erst ermöglicht oder bedeutend verbessert wird. Um den Aufwand für die Erzeugung der $CO_2$-Impulslaserstrahlung zu vermindern, ist es vorteilhaft, sehr kurze Impulse im Megawatt-Bereich mit genügend hoher Folgefrequenz, die je nach Bearbeitungsgeschwindigkeit im 100 Hz bis 1 kHz-Bereich liegen muß, zu erzeugen. Das gelingt vorteilhaft mit einem Mini-TEA-$CO_2$-Impulslaser (TEA = Transversale Elektrische Anregung bei Atmosphärendruck), der leicht mit Folgefrequenz im 100 Hz bis 1 kHz-Bereich bei hohem Wirkungsgrad von mehr als 5 % betrieben werden kann bei einer Gasmischung, die nur aus $CO_2$ und $N_2$ besteht, so daß sowohl die Anschaffungskosten des Lasers als auch seine Betriebskosten sehr niedrig sind.

Des weiteren genügt eine mittlere Leistung des Hilfslasers, die nur ein Hundertstel der cw-Strahlung beträgt, um eine viel effektivere Materialbearbeitung zu ermöglichen. Die Impulslaserstrahlung kann weiterhin entweder dirket in den cw-Bearbeitungsstrahl eingekoppelt werden, wodurch nur eine Bearbeitungsoptik nötig ist und umfangreiche Justierarbeiten entfallen oder auch separat mit eigener Fokussierungslinse auf oder an den Rand des cw-Fokus gerichtet werden, um einen optimalen "Vorlauf" zu erzielen.

Vorteilhaft kann durch die Erfindung bei einem cw-$CO_2$-Laser, also bei einem kontinuierlich arbeitenden $CO_2$-Laser, durch Ausnutzung der Absorptionserzeugung mittels des $CO_2$-Impulslasers ein Pulsen der cw-Laserstrahlen erzeugt werden. Hierzu werden die aus dem cw-$CO_2$-Laser ausgekoppelten Laserstrahlen mit einer Leistungsdichte auf einen Werkstoffbereich bzw. eine Werkstoffstelle oder Abschnitten von diesen fokussiert, die eine Einkopplung in den Werkstoff nicht zulassen. Durch auf den Werkstoffbereich bzw. die Werkstoffstelle oder Abschnitte von diesen fokussierte Strahlung des $CO_2$-Impulslasers wird der Werkstoff so stark erhitzt, daß er in den Plasmazustand übergeht. Hierdurch findet eine Absorption der cw-$CO_2$-Laserstrahlung an das Werkstück statt. Durch Ein- oder Ausschalten, d. h. in Abhängigkeit von der Auftreffdauer der Strahlung des $CO_2$-Impulslasers, wird ein Impuls der cw-$CO_2$-Laserstrahlen in den Werkstoff eingekoppelt.

Nach einem weiteren Verfahren der Erfindung wird der cw-$CO_2$-Laserstrahl aufgeweitet, so daß er einen Werkstoffbereich beaufschlagt, ohne daß eine Einkopplung der Laserstrahlung in diesen Werkstoffbereich stattfindet. Anschließend wird die Strahlung eines $CO_2$-Impulslasers auf eine innerhalb des Werkstoffbereiches liegende Werkstoffstelle gerichtet. Die cw-$CO_2$-Laserstrahlung wird an

dieser Bearbeitungsstelle absorbiert und diese Werkstoffstelle beispielsweise gehärtet. Durch diese Maßnahme kann vorteilhaft in einfacher Weise eine komplizierte Struktur bzw. Figur 3 innerhalb des Werkstoffbereiches 2 gehärtet oder mit einer Beschichtung versehen werden.

Vorteilhaft kann bei allen Einkoppelverfahren der cw-$CO_2$-Laserstrahlung während des Bearbeitungsvorganges ein inertes Gas auf die Bearbeitungsstelle geblasen werden, so daß eine Oxidation des Werkstoffes verhindert wird. Hierdurch wird vorteilhaft ein Härten von blanken Metallen ohne Nachbearbeitung möglich.

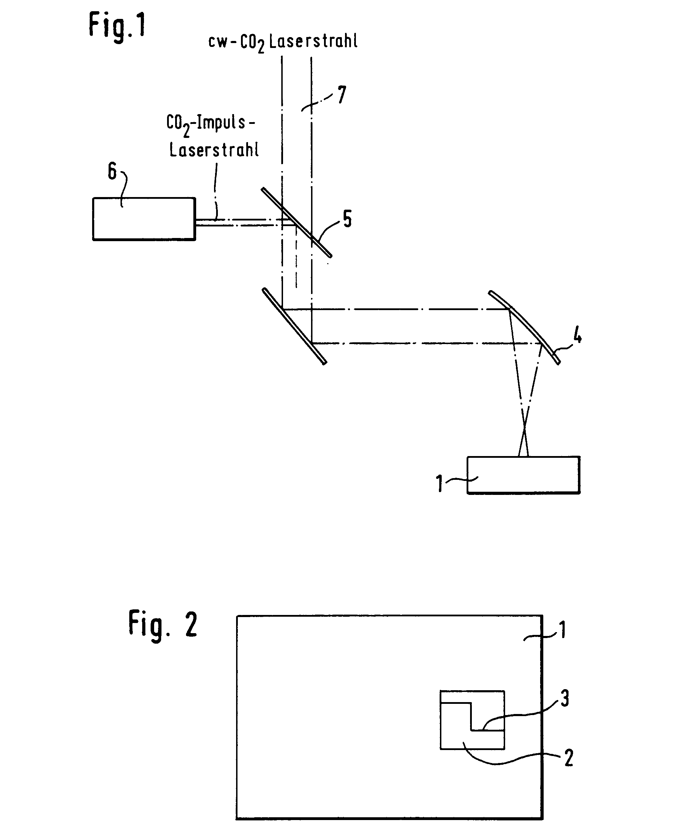

In der Fig. 1 wird eine vorteilhafte Vorrichtung zur Durchführung des Verfahrens dargestellt, bei der der $CO_2$-Impulslaserstrahl vor der Bearbeitungsoptik 4 in den Strahlengang eingekoppelt wird. Hierzu ist im Strahlengang ein für die cw-$CO_2$-Laserstrahlung durchlässiger Spiegel 5 vorgesehen, dessen Unterseite leicht verspiegelt ist. Über diese verspiegelte Unterseite wird der $CO_2$-Impulslaserstrahl in den Strahlengang eingekoppelt. Der cw-$CO_2$-Laserstrahl ist mit 7 und der $CO_2$-Impulslaser mit 6 bezeichnet.

## Patentansprüche

1. Verfahren zur Einkopplung von cw-$CO_2$-Laserstrahlen in einen Werkstoffbereich bzw. eine Werkstoffstelle oder Abschnitten von diesen,
dadurch gekennzeichnet,
daß auf den Werkstoffbereich bzw. die Werkstoffstelle oder Abschnitten von diesen die Strahlung eines $CO_2$-Impulslasers fokussiert wird.

2. Verfahren nach Anspruch 1,
dadurch gekennzeichnet,
daß die Impulsdauer des $CO_2$-Impulslasers im Bereich zwischen 10 ns und 100 $\mu$s liegt.

3. Verfahren nach Anspruch 1 oder 2,
dadurch gekennzeichnet,
daß die Folgefrequenz der Impulse in einem Bereich zwischen 100 Hz und 1 kHz liegt.

4. Verfahren nach einem der Ansprüche 1 bis 3,
dadurch gekennzeichnet,
daß die Strahlung des $CO_2$-Impulslasers in den Strahlengang des cw-$CO_2$-Lasers vor der Bearbeitungsoptik (4) eingekoppelt und mit dieser gemeinsam fokussiert wird.

5. Verfahren nach einem der Ansprüche 1 bis 3,
dadurch gekennzeichnet,
daß die Strahlung des $CO_2$-Impulslasers in einer separaten Bearbeitungsoptik auf den gemeinsamen Wekstoffbereich bzw. Werkstoffstelle oder Abschnitten von diesen fokussiert wird.

6. Verfahren zum Bearbeiten, insbesondere zum Beschichten, Härten oder dergleichen von Werkstoffstellen, die in einem Werkstoffbereich angeordnet sind, insbesondere unter Verwendung des Verfahrens nach einem der Ansprüche 1 bis 5,
dadurch gekennzeichnet,
daß der Werkstoffbereich mit Laserstrahlen eines cw-$CO_2$-Laseres ohne Einkopplung der Laserstrahlen beaufschlagt wird und die Einkopplung der Laserstrahlen durch die Strahlung eines $CO_2$-Impulslasers mit einer Impulsdauer in einem Bereich zwischen 10 ns bis 100 $\mu$s ereicht wird, die auf die Werkstoffstellen gerichtet wird.

7. Verfahren zum Erzeugen von Laserstrahlimpulsen bei einem cw-$CO_2$-Laser, insbesondere unter Verwendung des Verfahrens nach einem der Ansprüche 1 bis 6,
dadurch gekennzeichnet,
daß die aus dem cw-$CO_2$-Laser ausgekoppelten Laserstrahlen mit einer Leistungsdichte auf einen Werkstoffbereich bzw. eine Werkstoffstelle oder Abschnitten von diesen fokussiert werden, die eine Einkopplung in den Werkstoff nicht zulassen und auf den Werkstoffbereich bzw. die Werkstoffstelle oder Abschnitten von diesen die Strahlung eines $CO_2$-Impulslasers mit einer Impulsdauer zwischen 10 ns bis 100 $\mu$s fokussiert wird, so daß ein Plasma entsteht und die cw-$CO_2$-Laserstrahlen in Abhängigkeit von der Auftreffdauer der Strahlung des $CO_2$-Impulslasers in den Werkstoff eingekoppelt wird.

8. Verfahren nach einem der Ansprüche 1 bis 7,
dadurch gekennzeichnet,
daß der Werkstoffbereich bzw. die Werkstoffstelle oder Abschnitte von diesen mit einem inerten Gas beaufschlagt werden.

9. Vorrichtung zur Durchführung des Verfahrens nach einem der Ansprüche 1 bis 7 mit einem einen cw-$CO_2$-Laserstrahl ausbildenden Laser sowie einem im Strahlengang angeordneten optischen System,
dadurch gekennzeichnet,
daß das optische System einen für die cw-$CO_2$-Laserstrahlung durchlässigen Spiegel aufweist, über dessen spiegelnde Unterseite die Laserstrahlen eines $CO_2$-Impulslasers in den Strahlengang einkoppelbar sind.

10. Vorrichtung nach Anspruch 9,
dadurch gekennzeichnet,
daß der $CO_2$-Impulslaser ein TEA-Laser ist.

# Fig.1

cw-CO$_2$ Laserstrahl

CO$_2$-Impuls-
Laserstrahl

6

7

5

4

1

# Fig. 2

1

3

2

**Europäisches Patentamt**

# EUROPÄISCHER RECHERCHENBERICHT

Nummer der Anmeldung

**EP 91 11 6511**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 8, no. 128 (M-302)(1565) 14. Juni 1984 & JP-A-59 030 494 ( TOKYO SHIBAURA DENKI K.K. ) 18. Februar 1984 * Zusammenfassung * * — — — | 1,4,9 | B 23 K 26/06 |
| X | PATENT ABSTRACTS OF JAPAN vol. 7, no. 182 (E-192)(1327) 11. August 1983 & JP-A-58 087 887 ( HORIBA SEISAKUSHO K.K. ) 25. Mai 1983 * Zusammenfassung * * — — — | 1,4 | |
| X | PATENT ABSTRACTS OF JAPAN vol. 10, no. 115 (M-474)(2172) 30. April 1986 & JP-A-60 244 495 ( MITSUBISHI DENKI K.K. ) 4. Dezember 1985 * Zusammenfassung * * — — — | 1-10 | |
| A | EP-A-0 308 512   (NIPPON STEEL CORPORATION) * das ganze Dokument * * — — — — — | 1,2,6,7 | |

| | |
|---|---|
| | RECHERCHIERTE SACHGEBIETE (Int. Cl.5) |
| | B 23 K |

Der vorliegende Recherchenbericht wurde für alle Patentansprüche erstellt

| Recherchenort | Abschlußdatum der Recherche | Prüfer |
|---|---|---|
| Den Haag | 06 Februar 92 | ARAN D.D. |